# EUROPÄISCHE PATENTSCHRIFT

(11) **EP 2 294 925 B1**
(45) Veröffentlichungstag und Bekanntmachung des Hinweises auf die Patenterteilung: **16.10.2013**
(21) Anmeldenummer: 10015938.3
(22) Anmeldetag: 22.12.2010
(51) Int. Cl.: A23B 7/02, A23B 7/03, A23L 1/216, A23L 1/217, A23L 1/31, A23L 1/325, A23L 1/212, A23B 4/03

(54) **Chipmischung**
Chip mixture
Mélange de chips

(30) Priorität: 07.01.2010 EP 10000072
(43) Veröffentlichungstag der Anmeldung: 16.03.2011
(73) Patentinhaber: Zweifel Pomy-Chips AG, 8957 Spreitenbach (CH)
(72) Erfinder: Blumenthal, Marco, 5400 Baden (CH)
(74) Vertreter: Rüedi, Regula Béatrice

(56) Entgegenhaltungen:
- EP-A1- 0 498 241
- EP-A1- 1 001 684
- EP-A2- 0 155 703
- EP-A2- 0 935 927

## Beschreibung

### Gebiet der Erfindung

Die vorliegende Erfindung betrifft die Herstellung von entwässerten, d.h. getrockneten und/oder frittierten Nahrungsmittelsnacks, wie Nahrungsmittelchips, insbesondere die Herstellung von solchen Snacks, wie Snacks mit Gemüse-, Obst- und Fleischchips und Mischungen derselben.

### Hintergrund

Verschiedene Verfahren zur Herstellung von Chips, insbesondere Kartoffelchips sind bekannt. Das gängigste dieser Verfahren ist die Herstellung von Chips durch Frittieren dünner Kartoffelscheiben. Da sich frittierte Kartoffelchips durch ein gutes Aroma und gute organoleptische Eigenschaften aber auch durch hohen Fettgehalt auszeichnen, sind schon lange Bestrebungen unternommen worden, den Fettgehalt zu reduzieren, das Aroma und die organoleptischen Eigenschaften aber möglichst den frittierten Produkten anzugleichen (siehe z.B. WO 99/04650). Solche Verfahren zur Herstellung fettreduzierter oder fettarmer Produkte schliessen Röstverfahren sowie Trocknungsverfahren z.B. im Wirbelschicht- oder Bandtrockner mit und ohne vorgängig durchgeführtem oder nachgeschaltetem Frittierschritt ein.

Ebenfalls bereits bekannt sind Snackprodukte, die aus Teig hergestellt werden, z.B. frittierte oder getrocknete Produkte auf der Basis von Kartoffeln und/oder Getreide, die ein breites Spektrum an Formen einnehmen können, wie Scheibenform, üblicherweise bezeichnet als Chips, oder Pellets.

Während alle diese Verfahren zu mehr oder weniger gut akzeptierten, knusprigen Snacks, wie Gemüsechips, insbesondere Kartoffelchips, und Fruchtchips, insbesondere Apfelchips, führen, sind sie für viele Gemüse-, Obst- und Fleisch-Produkte nicht geeignet, da sie zu Aroma- und/oder Farbverlust führen, was die Akzeptanz des Snack-Produkts stark herabsetzt.

Aus EP 0 935 972 ist ein rehydratisierbares Kartoffelprodukt bekannt, das durch Zusammenkleben kleiner blanchierter Kartoffelstücke und anschliessendes Trocknen bei Temperaturen unter 110°C, üblicherweise mit abnehmender Trocknungstemperatur, auf unter 10 Gew.-% Wasser, beispielsweise 7-8 Gew.-% Wasser getrocknet wird. Dieses Produkt ist nicht zum Verzehr als Trockenprodukt (Snack) vorgesehen, sondern zum Verzehr in rehydratisiertem (und gegebenenfalls weiterverarbeitetem, z.B. frittiertem) Zustand.

Ziel der vorliegenden Erfindung war es deshalb, ein Verfahren zur Herstellung eines entwässerten Trockenprodukts, üblicherweise eines Snackproduktes, insbesondere eines Chipsproduktes und einer Chipsmischung, bereit zu stellen, sowie ein Trockenprodukt, wie ein Snackprodukt, beispielsweise ein Chipsprodukt und eine Chipsmischung, die mindestens einen Anteil an Gemüse und/oder Obst und/oder Fleisch bzw. Fisch und/oder Getreide mit gutem Aroma- und/oder Farberhalt aufweist.

### Darstellung der Erfindung

Diese Aufgabe wurde gelöst durch ein Verfahren zur Herstellung eines Trockenprodukts, insbesondere von Chips (in der Folge bezeichnet als Produkt der ersten Art) durch Wasserentzug, das dadurch gekennzeichnet ist, dass Produkt der ersten Art mit einem Wassergehalt von mindestens 5 und maximal 15 Gew.-% in einem Endtrocknungsschritt bei einer Temperatur unter 80°C, vorzugsweise unter 60°C, insbesondere bei Umgebungstemperatur, mindestens teilweise mittels Produkt der zweiten Art wie unten definiert Wasser entzogen wird.

Unter Trockenprodukt bzw. Produkt wird im Rahmen dieser Erfindung ein Nahrungsmittel in stückiger Form verstanden, wobei die einzelnen Stücke oder Teilchen scheibenförmig, stabförmig, schnitzförmig oder pelletförmig sein können. Unter scheibenförmig wird eine Form verstanden, deren Ausdehnung in zwei Richtungen wesentlich grösser ist als in der dritten Richtung, üblicherweise mindestens fünfmal grösser, und in der die Dicke im wesentlichen konstant ist. Scheibenförmige Produkte werden auch als Chips bezeichnet, z.B. Kartoffelchips. Stabförmig bezeichnet eine Form, in der eine Ausdehnung wesentlich länger ist als die anderen beiden Ausdehnungen, üblicherweise mindestens doppelt so lang als die grössere Ausdehnung in eine der beiden anderen Richtungen, wobei auch hier der Durchmesser im wesentlichen konstant ist, beispielsweise die Hauptmenge der Pommes frites. Schnitzförmig bezeichnet Formen, in denen mindestens die kleinste Dimension, die Dicke, variiert, üblicherweise relativ regelmässig zu- bzw. abnimmt. Prominentester Vertreter der Schnitze sind Apfelschnitze. Pelletförmig bezeichnet alle Formen, in denen sich die drei Dimensionen nicht wesentlich unterscheiden. Diese Formen können je nach Nahrungsmittel unterschiedlich bevorzugt sein.

Im Rahmen dieser Erfindung umfassen die Begriffe "Produkt der ersten Art" und "Produkt der zweiten Art" auch Mischungen von verschiedenen Gemüsen, verschiedenen Früchten, verschiedenen Fleisch - oder Fischarten und verschiedenen Getreiden sowie jede beliebige Kombination von Gemüse und/oder Früchten und/oder Fleisch bzw. Fisch und/oder Getreide.

Unter Umgebungstemperatur wird im Rahmen dieser Erfindung ein Temperaturbereich von ca. 10 bis ca. 40°C verstanden, insbesondere von 20 bis 35°C.

Der Endtrocknungsschritt kann in einem Schritt oder in mehreren, z.B. zwei, Teilschritten mit gleich- oder verschiedenartigen Entwässerungsmitteln erfolgen, wobei ein Entwässerungsmittel, üblicherweise das zuletzt eingesetzte oder eines der zuletzt eingesetzten Produkt der zweiten Art (siehe unten) ist.

Verfahren zum vorgängigen Wasserentzug sind beispielsweise bei hoher Temperatur, z.B. oberhalb von 100°C arbeitende Trocknungsverfahren, insbesondere Frittierverfahren und/oder Trocknungsverfahren, mit denen auf maximal ca. 15 Gew.-%, vorzugsweise auf ca. 8 bis ca. 10 Gew.-% Wassergehalt vorgetrocknet wird. Bei speziell kritischen Produkten, bei denen Temperaturen über 100°C bereits im feuchten Zustand zu Verfärbung und/oder unerwünschter Geschmacksveränderung führt, kann es sein, dass bereits die Vortrocknung bei tieferen Temperaturen durchgeführt werden muss, z.B. bei Temperaturen von 80°C bis 100°C mit entsprechend verlängerten Trocknungszeiten.

Mittels des für die Endtrocknung beschriebenen Verfahrens könnten auch feuchtere Produkte direkt getrocknet werden; allerdings wäre ein solches Verfahren aufgrund der grossen Menge Trocknungsmittel bzw. der langen Verfahrensdauer nicht wirtschaftlich.

Die Produkte der ersten Art können Gemüsechips und/oder Fruchtchips und/oder Fleischchips und/oder Fischchips sein. Gemüse und Früchte für die Produkte der ersten Art können auch als Schnitze vorliegen, was für Fleisch und Fisch nicht bevorzugt ist. Die Produkte der ersten Art können auch Teigprodukte sein oder enthalten, insbesondere wenn in den Teig farbige oder vom Geschmack her empfindliche Nahrungsmittel eingearbeitet wurden. Die Bezeichnung Produkt der ersten Art, wie sie im Rahmen der Erfindung gebraucht wird, schliesst Mischungen von Chips und/oder Schnitzen verschiedener Gemüse, Mischungen von Chips und/oder Schnitzen verschiedener Obstsorten, Mischungen von Chips verschiedener Fleisch und/oder Fischsorten, Mischungen von Teigprodukten sowie Mischungen von Gemüse und/oder Obst und/oder Fleisch bzw. Fisch und/oder Teigprodukten ein.

Fleischchips oder Fischchips werden vorzugsweise vorgetrocknet mittels eines zweistufigen Verfahrens, in welchem dem eigentlichen Vortrocknungsschritt ein Lufttrocknungsschritt des Fleisches oder Fischs "am (unzerteilten)Stück" auf einen Wassergehalt von unter 70 Gew.-%, üblicherweise unter 60 Gew.-%, vorzugsweise unter 50 Gew.-% und insbesondere auf einen Wassergehalt um ca. 50 Gew.-%, vorgeschaltet ist, wonach das derart luftgetrocknete Fleisch oder der derart luftgetrocknete Fisch in Scheiben von maximal 2 mm Dicke, vorzugsweise 0.3 bis 1 mm Dicke, insbesondere 0.5 bis 0.7 mm Dicke, geschnitten wird. Diese Scheiben werden dann in einem Trockner auf einen Wassergehalt von maximal 15 Gew.-%, vorzugsweise einen Wassergehalt von 5 bis 12 Gew.-%, speziell bevorzugt 8 bis 10 Gew.-% getrocknet.

Sind die Produkte der ersten Art Gemüsechips und/oder Fruchtchips, dann wird das Gemüse und/oder Obst vor der Vortrocknung in Scheiben von maximal 2 mm Dicke, insbesondere 0.5 bis 1 mm Scheibendicke geschnitten, gegebenenfalls nach Schälen des noch ungeschnittenen Gemüses und/oder Obstes.

Sind die Produkte der ersten Art Gemüseschnitze und/oder Fruchtschnitze, dann wird das Gemüse und/oder Obst vor der Vortrocknung in Schnitze geschnitten, deren Dicke von maximal 20 mm Dicke, insbesondere maximal 10 mm Dicke, oder auch nur maximal ca. 5 mm Dicke bis auf eine gegen 0 strebende Dicke abnimmt, wobei die Minimaldicke üblicherweise bei ca. 0.5 mm liegt. Das Schneiden erfolgt gegebenenfalls nach Schälen des noch ungeschnittenen Gemüses und/oder Obstes.

Das erfindungsgemäss verwendete Entwässerungsmittel, das Produkt der zweiten Art, besteht aus trockenen Nahrungsmittelprodukten, insbesondere Chips, die gegebenenfalls zusammen mit einem weiteren Entwässerungsmittel eingesetzt werden könnten, vorzugsweise aber alleine zur Anwendung kommen. Weitere Entwässerungsmittel sind beispielsweise Molekularsieb und/oder Silikagel und/oder "trockene" Luft. Bevorzugt sind feste Entwässerungsmittel.

Produkte der zweiten Art sind insbesondere Gemüsechips oder Fruchtchips oder Teigprodukte mit einem Wassergehalt von unter 3 Gew.-%, vorzugsweise maximal 2 Gew.-%, insbesondere ca. 1 Gew.-% oder gar unter 1 Gew.-%, beispielsweise nur ca. 0.5 Gew.-%. Diese können beispielsweise durch Frittieren hergestellt worden sein. Bevorzugte Gemüsechip der zweiten Art sind Kartoffelchips, bevorzugte Teigprodukte sind beispielsweise Teigprodukte mit Kartoffeln und/oder Getreide wie Weizen, Mais, Reis, Hafer, Gerste und Mischungen derselben, die frittiert, gebacken oder getrocknet sein können.

Die Bezeichnung Produkt der zweiten Art, wie sie im Rahmen der Erfindung gebraucht wird, schliesst Mischungen von Chips und/oder Schnitzen und/oder Stäbchen verschiedener Gemüse, Mischungen von Chips und/oder Schnitzen und/oder Stäbchen verschiedener Obstsorten, Mischungen von Chips und/oder Schnitzen und/oder Stäbchen und/oder Pellets verschiedener Teigprodukte sowie Mischungen von Gemüsen und/oder Obst und/oder Teigprodukten ein.

Damit organoleptisch gute Produkte bzw. Produktmischungen erhalten werden, sollte der mittlere Wassergehalt einer aus Produkt der ersten Art und Produkt der zweiten Art hergestellten Produktmischung möglichst tief sein und ca. 4 Gew.-%, insbesondere ca. 3 Gew.-% Wassergehalt nicht überschreiten. Der mittlere Wassergehalt liegt deshalb vorzugsweise bei ca. 1 bis 4 Gew.-%, speziell bevorzugt bei 1.5 bis 4 Gew.-% und insbesondere bei 2 bis 3 Gew.-%. Für einen Wassergehalt von ca. 3 Gew.-% bedeutet dies, dass bei Vortrocknung des Produkts der ersten Art auf ca. 8 Gew.-% und Vortrocknung des Produkts der zweiten Art auf ca. 1 Gew.-% ohne zusätzliches Entwässerungsmittel maximal etwa 30 Gew.-% Produkt der ersten Art zugemischt werden können, bei Vortrocknung auf 5 Gew.-% dagegen um die 50 Gew.-%. Die Trocknung des Produkts der ersten Art mit Produkt der zweiten Art erfolgt vorzugsweise direkt in einer luftdichten Endverpackung bei Lagerbedingungen unter Umgebungstemperatur, vorzugsweise Raumtemperatur.

Die durch das erfindungsgemässe Verfahren erhältlichen Snacks, insbesondere Chipsmischungen, enthalten vorzugsweise mindestens ein Produkt der ersten Art und mindestens ein Produkt der zweiten Art, wobei mindestens ein Produkt der zweiten Art vorzugsweise aus Kartoffelchips oder Teigprodukt besteht und/oder einem Frittierschritt unterzogen wurde und vorzugsweise vollständig frittiert ist.

### Kurze Beschreibung der Zeichnungen

Beispiele für Formen der Produkte der ersten und zweiten Art sind den Figuren zu entnehmen. Dabei zeigen
Figur 1 scheibenfömige Ausführungsformen, auch als Chips bezeichnet,
Figur 2 stäbchenförmige Ausführungsformen,
Figur 3 schnitzförmige Ausführungsformen und
Figur 4 pelletförmige Ausführungsformen.

### Wege zur Ausführung der Erfindung

Wie bereits oben erwähnt erfolgt die Herstellung mindestens eines Teils der Produkte, dem Produkt der ersten Art, durch Wasserentzug bei tiefer Temperatur, insbesondere bei Temperaturen unter ca. 60°C, z.B. bei Raumtemperatur, mindestens teilweise mittels Produkt der zweiten Art.

Weitere Entwässerungsmittel kann jedes für den Lebensmittelbereich zulässige Entwässerungsmittel sein, z.B. Molekularsieb, Silikagel oder "trockene" Luft, wie Luft bei 50-60°C. Bevorzugte weitere Entwässerungsmittel sind aber feste Entwässerungsmittel.

Das stets als eines der und bevorzugt als alleiniges Entwässerungsmittel eingesetzte Produkt der zweiten Art sind Gemüsestücke und/oder Fruchtstücke und/oder Teigstücke mit tiefem Wassergehalt, d.h. Wassergehalt von unter 3 Gew.-%, vorzugsweise maximal 2 Gew.-%, beispielsweise 1 Gew.-% oder 1.2 Gew.-% oder gar nur 0.5 Gew.-%.

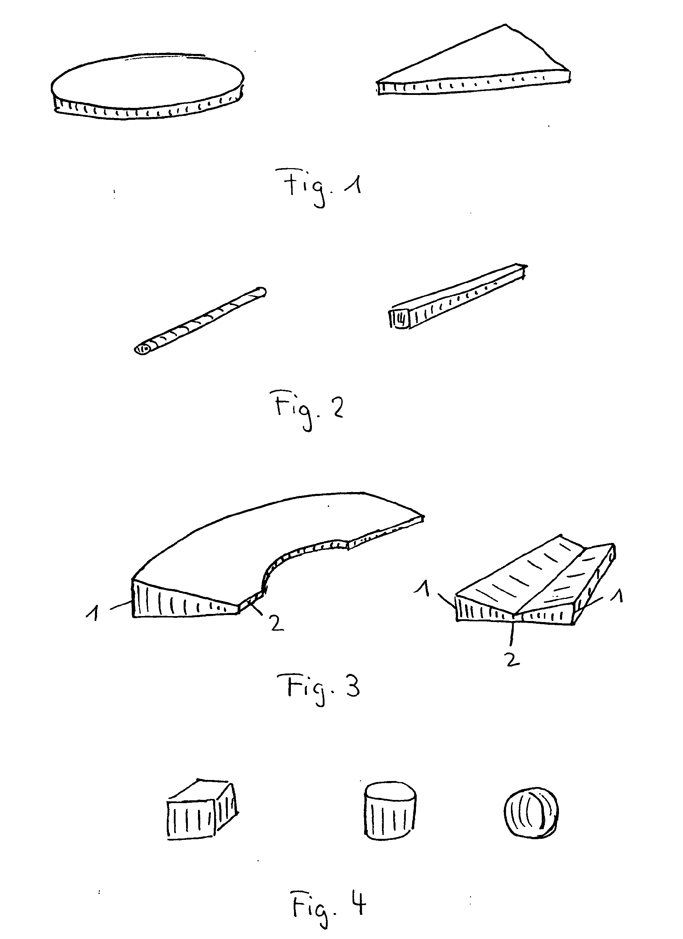

Die Produkte der ersten Art werden vorzugsweise vor der Endtrocknung und vorzugsweise in stückeiger Form mittels üblicher Verfahren vorgetrocknet. Unter stückiger Form werden im Rahmen der vorliegenden Erfindung scheiben- oder chipsförmige Produkte (Fig. 1) oder stäbchenförmige Produkte (Fig. 2) oder schnitzförmige Produkte (Fig. 3) oder pelletförmige Produkte (Fig. 4) verstanden.

Zur Vortrocknung eignen sich Frittierverfahren und/oder Trocknungsverfahren in gängigen Trocknern, wie Bandtrocknern oder Wirbelschichttrocknern oder (Vakuum-)Mikrowellentrocknern, gegebenenfalls nach einem Blanchier- oder Kochschritt. Der Wassergehalt nach dem Vortrocknungsschritt sollte möglichst gering sein, aber nicht so tief, dass bereits unerwünschte Geschmacks- und/oder Farbveränderungen stattfanden, so dass der optimale Feuchtigkeitsgehalt der Produkte der ersten Art nach der Vortrocknung bestimmt wird durch Optimierung der Merkmale Farbe, Aroma und Restfeuchtigkeit. Die Restfeuchtigkeit kann deshalb je nach den gewünschten Endeigenschaften etwas variieren, liegt jedoch üblicherweise unter 15 Gew.-% und vorzugsweise bei ca. 5 bis ca. 12 Gew.-%, insbesondere bei ca. 8 bis ca. 10 Gew.-%. Ein Wassergehalt von unter 5 Gew.-% führt meist schon zu unerwünschten Farb- und Geschmacksveränderungen. Obschon bei Vortrocknung mittels Frittieren Geschmacksveränderung erwünscht ist, sollte auch dort nur bis maximal auf einen Wassergehalt von ca. 8 Gew.-% entwässert werden, um Fettaufnahme der Produkte, beispielsweise der Chips gering zu halten. Bei einem Feuchtigkeitsgehalt ab 8 Gew.-%, beispielsweise von ca. 8 bis ca. 10 Gew.-%, nach Vortrocknung wurde bisher bei keinem der getesteten Produkte unerwünschte Farb- und/oder Geschmacksveränderung festgestellt und ein solcher Wassergehalt lässt sich mit herkömmlichen Verfahren problemlos erhalten. Je nach Art der Produkte der ersten Art treten auch bei Wassergehalten unter ca. 8 Gew.-%, d.h. beispielsweise bei Wassergehalten bis ca. 7 Gew.-%, noch keine Geschmacks- und/der Farbveränderungen auf.

Während Gemüse und Obst für die Vortrocknung meist bereits in Scheiben (Fig. 1) oder Schnitze (Fig. 3) geschnitten eingesetzt werden, wobei die Scheibendicke üblicherweise unter 2 mm liegt, vorzugsweise im Bereich von 0.5 bis 1 mm, und die Schnitzdicke variabel ist von z.B. einer Maximaldicke 1 von ca. 20 mm auf eine Minimaldicke 2 von ca. 0.5 mm, hat sich für die Herstellung von Fleischchips ein zweistufiges Verfahren als bevorzugt herausgestellt.

Darin wird das üblicherweise bereits gewürzte Fleisch am (unzerteilten) Stück luftgetrocknet. Der Wassergehalt nach Lufttrocknung sollte unter 60 Gew.-%, vorzugsweise unter 50 Gew.-% und aus ökonomischen Gründen um ca. 50 Gew.-% liegen. Das derart vorgetrocknete Fleischstück wird dann analog dem Vorgehen für Gemüse und Obst in Scheiben geschnitten, wobei sich für Fleisch Dicken der Fleischstücke von maximal 2 mm, vorzugsweise Dicken von 0.3 bis 1 mm und insbesondere Dicken im Bereich von 0.5 bis 0.7 mm gut bewährt haben. Diese Fleischstücke werden dann dem Vortrocknungsschritt, üblicherweise in einem Trockner, wie einem Bandtrockner oder einem Wirbelschichttrockner, unterzogen. Falls spezielle Geschmacksnoten erzeugt werden sollen kann auch ein Frittierschritt vorgesehen werden. Die Trocknung erfolgt bis zu einem Wassergehalt von maximal ca. 15 Gew.-%, vorzugsweise einem Wassergehalt von ca. 5 bis 12 Gew.-%, insbesondere einen Wassergehalt von ca. 8 bis 10 Gew.-%.

Die Lufttrocknung (und gegebenenfalls die Vorbehandlung) erfolgt ähnlich der Trocknung von Bündnerfleisch. Bündnerfleisch ist gepökeltes, von Sehnen und Fett befreites Rindfleisch. Es wird mit Salz, Salpeter und Gewürzen einige Wochen bei einer Temperatur nahe dem Gefrierpunkt in einem geschlossenen Behälter gelagert. Danach wird das Fleisch mehrere Wochen lang getrocknet. Während der Trocknungsphase wird das Fleisch mehrmals gepresst, um die verbliebene Flüssigkeit gleichmässig zu verteilen.

Anstelle von Rindfleisch kann auch jedes beliebige andere Fleisch, wie Schweinefleisch, Kalbfleisch, Geflügel, aber auch Fisch eingesetzt werden.

Als sehr gut geeignet hat sich dieses Verfahren auch für Produkte, insbesondere Chips der ersten Art erwiesen, bei denen es sich um farbiges Gemüse, wie Kürbis, Karotten, blaue und rote Kartoffeln, rote Beete, Zucchini und/oder Tomaten, handelt. Während Karotten, blaue und rote Kartoffeln, rote Beete, Zucchini und Tomaten nur als Produkte, insbesondere Chips der ersten Art einsetzbar sind, lässt sich Kürbis gut trocknen, so dass Kürbis, beispielsweise als Chips, auch als Produkt bzw. Chips der zweiten Art eingesetzt werden kann.

Die Endtrocknung erfolgt mit Produkt der zweiten Art, gegebenenfalls zusammen mit weiteren festen Entwässerungsmitteln oder mit trockener Luft.

Die Produkte der zweiten Art können nach gängigen Trocknungsverfahren hergestellt werden, insbesondere durch Frittieren oder nach einem anderen Entwässerungsverfahren des Stands der Technik, wie Backen, Rösten, Toasten, Trocknen oder Kombinationen dieser Verfahren. Beispiele für geeignete Verfahren sind, um nur einige zu nennen, beispielsweise in den europäischen Patentanmeldungen EP 100 16 84, EP 893 068 oder EP 498 241 beschrieben.

Die Produkte der zweiten Art können ebenfalls beliebige Gemüse- und/oder Obst- und/oder Teigprodukte sein, soweit die durch die Volltrocknung bedingten Geschmacks- und Farbveränderungen akzeptabel sind. Speziell bevorzugt sind aber Gemüsechips, insbesondere Kartoffelchips. Voll getrocknete Fleischchips können zwar mit den bekannten Verfahren hergestellt werden, sie sind aber hinsichtlich Farbe und Geschmack nicht zufriedenstellend und deshalb als Produkte, speziell Chips, der zweiten Art schlecht geeignet.

Die Produkte der zweiten Art werden auf einen Wassergehalt unter 3 Gew.-% getrocknet, insbesondere einen Wassergehalt von maximal 2 Gew.-%, speziell bevorzugt einen Wassergehalt von ca. 1 Gew.-% oder unter 1 Gew.-%, wie 0.5 Gew.-%. Für durch Frittieren in einer herkömmlichen Fritteuse erhaltene Kartoffelchips ist beispielsweise ein Feuchtigkeitsgehalt von ca. 1.2 Gew.-% üblich, in einer Vakuumfritteuse oder in Kombination mit einem anderen bei hohen Temperaturen arbeitenden Trocknungsverfahren kann ein tieferer Wassergehalt eingestellt werden.

Das Gemüse und das Obst für die Produkte der ersten Art und/oder die Produkte der zweiten Art kann - je nach Wunsch - vor dem Schneiden und Trocknen geschält werden oder ungeschält verarbeitet werden.

Da Trockenprodukte, insbesondere Chips, bis zu einem Wassergehalt von ca. 3 bis 4 Gew.-% die gewünschten organoleptischen Eigenschaften, wie Knusprigkeit, beibehalten, lassen sich die Mischungen aus Produkt der ersten Art und Produkt der zweiten Art in gewissen Grenzen variieren. Vorzugsweise beträgt der Wassergehalt direkt nach dem Abpacken der Produkte im Durchschnitt maximal 3 Gew.-%. Für einen solchen Wassergehalt kann bei Vortrocknung des Produkts der ersten Art auf 10 Gew.-% und Trocknung des Produkts der zweiten Art auf 1 Gew.-% eine Produktmischung etwas mehr als 20 Gew.-% Produkt der ersten Art enthalten, bei einem Wassergehalt des Produkts der ersten Art nach Vortrocknung von 8 Gew.-% und Trocknung des Produkts der zweiten Art auf 1 Gew.-%, steigt der mögliche Anteil an Produkt der ersten Art auf ca. 30 Gew.-%. Bei einem Wassergehalt des Produkts der ersten Art nach Vortrocknung von 8 Gew.-% und einem Wassergehalt des Produkts der zweiten Art nach Trocknung von 2 Gew.-%, liegt der Grenzwert für Produkt der ersten Art bei gut 15 Gew.-%. Bei einem Wassergehalt des Produkts der ersten Art nach Vortrocknung von 5 Gew.-% und einem Wassergehalt des Produkts der zweiten Art nach Trocknung von 1 Gew.-%, liegt der Grenzwert für das Produkt der ersten Art bei ca. 50 Gew.-%. Unterhalb dieser Grenzwerte kann der Gehalt an Produkt der ersten Art beliebig variiert werden, z.B. im Hinblick auf die Farbzusammenstellung, die Aromen oder in ökonomischer Hinsicht.

Mischungen mit Gemüse- und/oder Obststücken, insbesondere Chips der ersten Art, und Gemüse und/oder Obststücke, insbesondere Chips, und/oder Teigprodukten der zweiten Art, enthalten üblicherweise bis ca. 50 Gew.-% Produkt der ersten Art, währenddem Mischungen mit Fleisch- und/oder Fischchips der ersten Art und Gemüse und/oder Obststücke der zweiten Art üblicherweise nur bis ca. 30 Gew.-% Produkt der ersten Art enthalten, vorzugsweise 20 bis 30 Gew.-%.

Falls reduzierte Knusprigkeit akzeptabel ist, oder wenn ein zweistufiger Endtrocknungsschritt eingesetzt wird, bei dem die Produkte der ersten Art in einem ersten Teilschritt auf einen Wassergehalt unter 10 bis 8 Gew.-%, beispielsweise auf eine Wassergehalt von 6 Gew.-%, und in einem zweiten Teilschritt weiter getrocknet werden, können die obengenannten Grenzwerte auch überschritten werden. Der erste Teilschritt kann z.B. durch Trocknung mittels Molekularsieb oder Silikagel oder trockener Luft von maximal ca. 60 °C erfolgen, oder aber mittels Produkt der zweiten Art. Der zweite Teilschritt erfolgt mit Produkt der zweiten Art. Wurde der erste Teilschritt bereits mit Produkt der zweiten Art durchgeführt, was möglich aber nicht bevorzugt ist, so wird dieses Produkt der zweiten Art für den zweiten Teilschritt erneuert, d.h. durch frisches Produkt der zweiten Art mit Wassergehalt unter 3 Gew.-%, vorzugsweise um ca. 1 Gew.-%, ersetzt.

Alle oben genannten Gewichtsangaben beziehen sich auf das Gewichte des Produkts mit den für Produkt der ersten Art bzw. Produkt der zweiten Art für die Durchführung des Endtrocknungsschrittes angegebenen Wassergehalten, nicht auf das Gewicht der Produkte der ersten und zweiten Art im Endprodukt nach Endtrocknung bzw. Feuchtigkeitsausgleich.

Die Endtrocknung bzw. deren zweiter Teilschritt mittels Produkt der zweiten Art erfolgt vorzugsweise in der Endverpackung. In Anbetracht der Zeit, die bei normalem Ablauf zwischen Produktion und Auslieferung vergeht, kann meist auf eine zusätzliche Zwischenlagerung zur Sicherstellung des Feuchtigkeitsausgleichs verzichtet werden, da dieser üblicherweise innerhalb von 2 Tagen abgeschlossen ist. Zur zusätzlichen Unterstützung der Trocknung kann in die Verpackung ein Entwässerungsmittel integriert werden. Dies wird aber nur in speziellen Fällen gewünscht oder erforderlich sein, z.B. bei Produktion in Ländern bzw. Umgebung mit sehr hoher Luftfeuchtigkeit oder bei höherem Anteil an Produkt der ersten Art.

Bezogen auf das Endprodukt ist das Produkt der ersten Art üblicherweise in Mengen von ca. 5 bis ca. 50 Gew.-%, vorhanden, insbesondere in Mengen von 10 bis 40 Gew.-% oder 15 bis 40 gew.-%. Solche Mengen können noch mit einstufiger Endtrocknung, d.h. alleine mittels Zumischung von Produkt der zweiten Art hergestellt werden. Ab Gehalten von 40 bis ca. 80 Gew.-% Produkt der ersten Art ist zweistufige Endtrocknung oder Zugabe eines weiteren Entwässerungsmittels erforderlich.

Die im Endprodukt enthaltenen Anteile an Produkt der ersten Art und Produkt der zweiten Art lassen sich dadurch unterscheiden, dass dank der schonenden Endtrocknung der Geschmack und/oder die Farbe, insbesondere beides, d.h. der Geschmack und die Farbe des Produkts der ersten Art weitgehend erhalten ist und/oder dass es fettärmer ist als entsprechendes Produkt der zweiten Art. Das Produkt der zweiten Art ist gegenüber Trocknung auch bei höherer Temperatur unkritisch und kann beispielsweise vollständig frittiert sein.

Das Endprodukt ist vorzugsweise ein Trockenprodukt, insbesondere ein Snackprodukt, dessen mittlerer Wassergehalt 1 bis 4 Gew.-%, insbesondere 1.5 bis 4 Gew.-%, speziell bevorzugt 2 bis 3 Gew.-% beträgt und das mindestens zwei Sorten Produkte enthält, wovon eines dem weiter entwässerten Produkt der ersten Art und das andere dem Produkt der zweiten Art mit erhöhtem Wassergehalt entspricht. In einem bevorzugten Trockenprodukt sind Produkte enthalten, wovon eines keine Kartoffelchips sind und/oder wovon eines frittiert und eines nur teilfrittiert oder vorzugsweise nicht frittiert ist.

Während in der vorliegenden Anmeldung bevorzugte Ausführungsarten der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Herstellung eines Trockenprodukts, welches ein Nahrungsmittel in stückiger Form ist, **dadurch gekennzeichnet, dass** Produkt der ersten Art mit einem Wassergehalt von mindestens 5 Gew.-% und maximal 15 Gew.-% in einem Endtrocknungsschritt bei einer Temperatur unter 80°C, insbesondere unter 60°C, speziell bevorzugt bei Umgebungstemperatur mindestens teilweise mittels eines Produktes der zweiten Art Wasser entzogen wird, wobei das Produkt der zweiten Art ein Nahrungsmittelprodukt ist.

2. Verfahren gemäss Anspruch 1, **dadurch gekennzeichnet, dass** das Produkt der ersten Art vor der Endtrocknung auf maximal ca. 15 Gew.-%, vorzugsweise ca. 5 bis ca. 12 Gew.-%, insbesondere ca. 8 bis ca. 10 Gew.-% Wassergehalt vorgetrocknet wird.

3. Verfahren gemäss irgend einem der vorangehenden Ansprüche, **dadurch gekennzeichnet, dass** das Produkt der ersten Art Gemüsestücke und/oder Fruchtstücke und/oder Fleischstücke und/oder Fischstücke, insbesondere Gemüsechips und/oder Fruchtchips und/oder Fleischchips und/oder Fischchips enthält oder daraus besteht.

4. Verfahren gemäss irgend einem der vorangehenden Ansprüche, **dadurch gekennzeichnet, dass** das Produkt der ersten Art Fleischchips oder Fischchips enthält oder daraus besteht.

5. Verfahren gemäss Anspruch 4, **dadurch gekennzeichnet, dass** das Produkt der ersten Art Fleischchips enthält oder daraus besteht.

6. Verfahren gemäss Anspruch 4 oder 5, **dadurch gekennzeichnet, dass**
dem Vortrocknungsschritt ein Lufttrocknungsschritt des Fleisches oder Fischs "am Stück" auf einen Wassergehalt von unter 60 Gew.-%, vorzugsweise unter 50 Gew.-% und insbesondere um ca. 50 Gew.-%, vorgeschaltet ist, dass
das derart vorgetrocknete Fleisch oder der derart vorgetrocknete Fisch in Scheiben von maximal 2 mm Dicke, vorzugsweise 0.3 bis 1 mm Dicke, insbesondere 0.5 bis 0.7 mm Dicke, geschnitten wird und dass
die Scheiben in einem Trockner auf einen Wassergehalt von maximal ca. 15 Gew.-%, vorzugsweise einen Wassergehalt von ca.5 bis ca. 12 Gew.-%, insbesondere einen Wassergehalt von ca. 8 bis ca. 10 Gew.-% getrocknet werden.

7. Verfahren gemäss irgend einem der Ansprüche 1 bis 3, **dadurch gekennzeichnet, dass** das Produkt der ersten Art Gemüsestücke und/oder Obststücke, insbesondere Gemüsechips und/oder Fruchtchips enthält oder daraus besteht.

8. Verfahren gemäss Anspruch 7, **dadurch gekennzeichnet, dass** Gemüse und/oder Obst vor der Vortrocknung in Scheiben von maximal 2 mm, insbesondere im Bereich von 0.5 bis 1 mm Scheibendicke geschnitten werden, und/oder dass Gemüse und/oder Obst vor der Vortrocknung in Schnitze einer von einer Maximaldicke (1) von 20 mm auf eine Minimaldicke (2) von ca. 0.5 mm variierenden Schnitzdicke geschnitten werden, insbesondere einer von einer Maximaldicke (1) von 10 mm auf eine Minimaldicke (2) von 0.5 mm variierenden Schnitzdicke.

9. Verfahren gemäss irgend einem der vorangehenden Ansprüche, **dadurch gekennzeichnet, dass** das Produkt der zweiten Art Gemüse- und/oder Fruchtstücke und/oder Teigstücke, insbesondere Gemüsechips und/oder Fruchtchips und/oder Teigchips, mit einem Wassergehalt von unter 3 Gew.-%, vorzugsweise maximal 2 Gew.-%, insbesondere ca. 1 Gew.-% enthält oder daraus besteht.

10. Verfahren gemäss Anspruch 9, **dadurch gekennzeichnet, dass** das Produkt der zweiten Art durch Frittieren hergestellt worden ist.

11. Verfahren gemäss Anspruch 9 oder 10, **dadurch gekennzeichnet, dass** das Produkt der zweiten Art Kartoffelchips enthält oder daraus besteht.

12. Verfahren gemäss irgendeinem der Ansprüche 9 bis 11, **dadurch gekennzeichnet, dass** das Produkt der ersten Art in einer Menge von bis zu ca. 50 Gew.-% oder bis zu ca. 30 Gew.-%, bezogen auf die Summe des Produkts der ersten Art und des Produkts der zweiten Art, eingesetzt wird.

13. Verfahren gemäss irgendeinem der Ansprüche 1 bis 8, **dadurch gekennzeichnet dass** im Endtrocknungsschritt zusätzlich ein Entwässerungsmittel ausgewählt aus Molekularsieb und/oder Silikagel und/oder "trockener" Luft verwendet wird.

14. Trockenprodukt, welches ein Nahrungsmittel in stückiger Form ist, insbesondere ein Snackprodukt, **dadurch gekennzeichnet, dass** es mittels des Verfahrens gemäss einem der Ansprüche 1 bis 13 erhältlich ist.

15. Trockenprodukt, welches ein Nahrungsmittel in stückiger Form ist, insbesondere ein Snackprodukt, insbesondere gemäss Anspruch 14, **dadurch gekennzeichnet, dass**
(i) der mittlere Wassergehalt 1 bis 4 Gew.-%, insbesondere 1.5 bis 4 Gew.-%, speziell bevorzugt 2 bis 3 Gew.-% beträgt und dass
(ii) es mindestens zwei Sorten Produkte enthält, wovon eines keine Kartoffelchips sind und/oder wovon eines frittiert und eines nur teilfrittiert oder vorzugsweise nicht frittiert ist.

## Claims

1. Method for the production of a dry product being a piece-shaped foodstuff, **characterized in that** in a final drying step the product of a first kind with a water content of at least 5 % by weight and at most 15 % by weight is dehydrated at a temperature of less than 80°C, in particular less than 60°C, much preferred at ambient temperature, at least partially by means of a product of a second kind, wherein the product of a second kind is a foodstuff product.

2. Method according to claim 1, **characterized in that** prior to the final drying step the product of a first kind is pre-dried to a water content of at most about 15 % by weight, preferably about 5 to about 12 % by weight, in particular about 8 to about 10 % by weight.

3. Method according to one of the preceding claims, **characterized in that** the product of a first kind contains or consists of vegetable pieces and/or fruit pieces and/or meat pieces and/or fish pieces, particularly vegetable chips and/or fruit chips and/or meat chips and/or fish chips.

4. Method according to one of the preceding claims, **characterized in that** the product of a first kind comprises or consists of meat chips or fish chips.

5. Method according to claim 4, **characterized in that** the product of a first kind comprises or consists of meat chips.

6. Method according to claim 4 or 5, **characterized in that**
prior to the pre-drying step the whole piece of meat or fish is subjected to an air-drying step to a water content of less than 60 % by weight, preferably less than 50 % by weight and in particular to a water content around about 50 % by weight, wherein
the such pre-dried meat or fish is cut into slices of a thickness at of at most 2 mm, preferably 0.3 to 1 mm, in particular 0.5 to 0.7 mm, and wherein
the slices are dehydrated in a dryer to a water content of at most about 15 % by weight, preferably to a water content of about 5 to about 12 % by weight, in particular to a water content of about 8 to about 10 % by weight.

7. Method according to one of the claims 1 to 3, **characterized in that** the product of a first kind comprises or consists of vegetable pieces and/or fruit pieces, in particular vegetable chips and/or fruit chips.

8. Method according to claim 7, **characterized in that** prior to the pre-drying step vegetable and/or fruit are cut into slices of a thickness of at most 2 mm, in particular to a thickness in a range of 0.5 to 1 mm, and/or **in that** prior to the pre-drying step vegetable and/or fruit are cut into wedges of a variable wedge thickness varying from a maximal thickness (1) of at most 20 mm to a minimal thickness (2) of at least 0.5 mm, in particular from a maximal thickness (1) of 10 mm to a minimal thickness (2) of 0.5 mm.

9. Method according to one of the preceding claims, **characterized in that** the product of a second kind contains or consists of vegetable pieces and/or fruit pieces and/or dough pieces, in particular vegetable chips and/or fruit chips and/or dough chips, with a water content of less than 3 % by weight, preferably at most 2 % by weight, in particular about 1 % by weight.

10. Method according to claim 9, **characterized in that** the product of a second kind has been produced by means of deep-frying.

11. Method according to claim 9 or 10, **characterized in that** the product of a second kind comprises or consists of potato chips.

12. Method according to one of the claims 9 to 11, **characterized in that** the product of a first kind is used in an amount of up to about 50 % by weight or to up to about 30 % by weight, referred to the sum of the product of a first kind and the product of a second kind.

13. Method according to one of the claims 1 to 8, **characterized in that** in the final drying step an additional dehydration means is used selected from the group consisting of molecular sieve and/or silica gel and/or "dry" air.

14. Dehydration product being a slice-shaped foodstuff, in particular a snack product, **characterized in that** it is obtained by the method according to one of the claims 1 to 13.

15. A dehydration product being a slice-shaped foodstuff, in particular a snack product, particularly according to claim 14, **characterized in that**
(i) the mean water content is 1 to 4 % by weight, in particular 1.5 to 4 % by weight, much preferred 2 to 3 % by weight, and
(ii) it comprises at least two kinds of products of which one is not potato chips and/or of which one is deep-fried and one is only partially deep-fried or preferably not deep-fried.

## Revendications

1. Procédé pour la production d'un produit sec étant un aliment en morceaux, **caractérisé en ce que** de l'eau est soustraite, dans une première étape de séchage final à une température de moins de 80°C, particulièrement de moins de 60°C, spécialement préféré à une température ambiante, du produit d'un premier type avec une teneur en eau d'au moins 5% en poids et de maximum 15% en poids au moins partiellement à l'aide d'un produit d'un deuxième type, le produit d'un deuxième type étant un aliment.

2. Procédé selon la revendication 1, **caractérisé en ce que** le produit d'un premier type est pré-séché avant le séchage final jusqu'à un maximum de teneur en eau d'environ 15% en poids, préférablement d'environ 5 à environ 12% en poids, particulièrement environ 8 à 10% en poids.

3. Procédé selon l'une des revendications précédentes, **caractérisé en ce que** le produit d'un premier type contient ou consiste de morceaux de légumes et/ou morceaux de fruits et/ou morceaux de viande et/ou morceaux de poisson, particulièrement chips de légumes et/ou chips de fruits et/ou chips de viande et/ou chips de poisson.

4. Procédé selon l'une des revendications précédentes, **caractérisé en ce que** le produit d'un premier type contient ou consiste de chips de viande ou de poisson.

5. Procédé selon la revendication 4, **caractérisé en ce que** le produit d'un premier type contient ou consiste de chips de viande.

6. Procédé selon la revendication 14 ou 5, **caractérisé en ce**
**qu'**une étape de séchage à l'air de la viande ou du poisson en une pièce jusqu'à une teneur en eau de moins de 60% en poids, préférablement de moins de 50% en poids et particulièrement d'environ 50% en poids se déroule avant l'étape de pré-séchage,
**que** la viande pré-séchée de cette manière ou le poisson pré-séché de cette manière est coupé en tranches de maximum 2 mm d'épaisseur, préférablement 0.3 à 1 mm, particulièrement 0.5 à 0.7 mm et
**que** les tranches sont séchées dans un sécheur jusqu'à une teneur en eau maximale d'environ 15% en poids, préférablement une teneur en eau d'environ 5 à environ 12% en poids, particulièrement une teneur en eau d'environ 8 à environ 10% en poids.

7. Procédé selon l'une des revendications 1 à 3, **caractérisé en ce que** le produit d'un premier type contient ou consiste de morceaux de légumes et/ou de morceaux de fruits, particulièrement de chips de légumes et/ou de chips de fruits.

8. Procédé selon la revendication 7, **caractérisé en ce que** avant le pré-séchage les légumes et/ou les fruits sont coupées en tranches avec une épaisseur de maximum 2 mm, particulièrement comprise dans l'intervalle de 0.5 à 1 mm, et/ou **en ce que** les légumes et/ou les fruits sont coupées avant le pré-séchage dans des tranches avec une épaisseur qui peut varier entre une épaisseur maximale (1) de 20 mm et une épaisseur minimale (2) d'environ 0.5 mm, particulièrement une épaisseur qui peut varier entre une épaisseur maximale (1) de 10 mm et une épaisseur minimale (2) de 0.5 mm.

9. Procédé selon l'une des revendications précédentes, **caractérisé en ce que** le produit d'un deuxième type contient ou consiste de morceaux de légumes et/ou de morceaux de fruits et/ou de morceaux de pâte, particulièrement de chips de légumes et/ou de chips de fruits et/ou de chips de pâte, avec une teneur en eau de moins de 3% en poids, préférablement maximum 2% en poids, particulièrement d'environ 1% en poids.

10. Procédé selon la revendication 9, **caractérisé en ce que** le produit d'un deuxième type a été fabriqué par friture.

11. Procédé selon la revendication 9 ou 10, **caractérisé en ce que** le produit d'un deuxième type contient ou consiste de chips de pommes de terre.

12. Procédé selon l'une des revendications 9 à 11, **caractérisé en ce que** le produit d'un premier type est utilisé dans une quantité jusqu'à environ 50% en poids ou jusqu'à environ 30% en poids par rapport à la somme du produit d'un premier type et du produit d'un deuxième type.

13. Procédé selon l'une des revendications 1 à 8, **caractérisé en ce qu'**un moyen de déshydratation choisi dans le groupe d'un tamis moléculaire et/ou silicagel et/ou de l'air "sec" est utilisé pour l'étape de séchage final.

14. Produit sec étant un aliment en morceaux, particulièrement un snack, **caractérisé en ce qu'**il est obtenu par le procédé selon l'une des revendications 1 à 13.

15. Produit sec étant un aliment en morceaux, particulièrement un snack, particulièrement selon la revendication 14, **caractérisé en ce que**
(i) la teneur en eau moyenne est de 1 à 4% en poids, particulièrement de 1.5 à 4% en poids, spécialement préféré 2 à 3% en poids et **en ce qu'**il
(ii) contient au moins deux types de produits, l'un ne consistant pas de chips de pommes de terre et/ou l'un étant frité et l'autre étant seulement frité partiellement ou préférablement pas frité.
